# EUROPÄISCHE PATENTANMELDUNG

(11) **EP 3 926 212 A1**
(43) Veröffentlichungstag der Anmeldung: **22.12.2021**
(21) Anmeldenummer: 20181157.7
(22) Anmeldetag: 19.06.2020
(51) Int. Cl.: F16H 57/021, F16H 57/033, F16H 57/031, F16H 57/02

(54) **SKALIERBARES GETRIEBEGEHÄUSE UND GEHÄUSEBAUREIHE**

(71) Anmelder: Flender GmbH, 46395 Bocholt (DE); Flender Industriegetriebe GmbH, 09322 Penig (DE)
(72) Erfinder: Die Erfindernennung liegt noch nicht vor
(74) Vertreter: Michalski Hüttermann & Partner Patentanwälte mbB

(57) **Zusammenfassung**

Die Erfindung betrifft ein Getriebegehäuse (10), umfassend einen Profilkörper (20), zwei Seitenwandungen (30,32,34) und eine Nabenleiste (40), die an einer der Seitenwandungen (30, 32,34) befestigt ist, wobei das Getriebegehäuse (10) trennfugenfrei ausgebildet ist. Die Erfindung betrifft auch eine Gehäusebaureihe (60) für Getriebe (50), umfassend eine Mehrzahl an Getriebegehäusen (10), die einen Profilkörper (20) aufweisen, der von zwei Seitenwandungen (30,32,34) verschlossen ist. Dabei ist in zumindest einer der Seitenwandungen (30, 32,34) eine Nabenleiste (40) angeordnet. Erfindungsgemäß sind die Getriebegehäuse (10) trennfugenfrei ausgebildet. Darüber hinaus betrifft die Erfindung ein Getriebe (50), das über ein erfindungsgemäßes Getriebegehäuse (10) verfügt, und eine Industrie-Applikation (90), bei der solch ein Getriebegehäuse (10) verwendet wird. Gleichermaßen betrifft die Erfindung ein Computerprogrammprodukt (80) zum Simulieren eines Betriebsverhaltens eines erfindungsgemäßen Getriebes (50).

## Beschreibung

Die Erfindung betrifft ein Getriebegehäuse, das durch einen modularen Aufbau skalierbar ist. Die Erfindung betrifft auch eine Gehäusebaureihe für Getriebe, die eine Mehrzahl an Gehäusen umfasst, die auf dem erfindungsgemäßen Getriebegehäuse basieren. Ferner betrifft die Erfindung eine Industrie-Applikation mit einem Getriebe mit einem korrespondierenden Gehäuse und ein Computerprogrammprodukt zum Simulieren eines Betriebsverhaltens eines solchen Getriebes.

Aus der Offenlegungsschrift US 2014/371028 A1 ist ein modulares Gehäuse für ein Planetengetriebe, das eine Profilkomponente umfasst, die mit Deckeln versehen ist, nämlich einem Ausgangsdeckel und einem Motordeckel. Die Deckel sind mit der Profilkomponente verschweißbar. Das Gehäuse ist mit einem Motor versehbar, so dass ein Getriebemotor verwirklicht wird.

Das Dokument EP 1 781 965 A1 offenbart ein Gehäuse für ein mehrstufiges Getriebe, das in mindestens zwei Varianten ausgebildet ist. In einer Wandung des Gehäuses sind unterschiedliche Bohrungen ausgebildet, die unterschiedlich positioniert sind. Durch Auswahl von Bohrungen, in denen Wellen aufzunehmen sind, sind unterschiedliche Varianten des Getriebes herstellbar.

Getriebe werden in einer breiten Spanne an Anwendungsgebieten eingesetzt, in denen hohe Anforderungen an die mechanische Leistungsfähigkeit gestellt werden. Gleichzeitig wird für derartige Getriebe eine einfache, schnelle Herstellbarkeit angestrebt. Ferner wird eine gute Anpassbarkeit an vorhandene Bauräume und Einsatzszenarien angestrebt. Der Erfindung liegt die Aufgabenstellung zugrunde, eine Möglichkeit bereitzustellen, die in zumindest einem der oben skizzierten Aspekte eine Verbesserung bietet.

Die Aufgabenstellung wird durch ein erfindungsgemäßes Getriebegehäuse gelöst, das einen Profilkörper umfasst, an dem zwei Seitenwandungen angebracht sind. Das Getriebegehäuse umfasst auch zumindest eine Nabenleiste, die an einer der Seitenwandungen befestigt ist. Drehmomentübertragende Getriebekomponenten, wie beispielsweise Wellen und Zahnräder, werden im Wesentlichen durch den Profilkörper und die Seitenwandungen umschlossen. Die Nabenleiste, die an der Seitenwandung befestigt ist, verschließt teilweise eine Ausnehmung in der Seitenwandung. Die Nabenleiste umfasst eine Mehrzahl an Naben, die dazu ausgebildet sind, jeweils zumindest ein Lager aufzunehmen, in dem eine Welle des Getriebes drehbar aufnehmbar ist. Dementsprechend ist die Nabenleiste im Betrieb des Getriebes den Reaktionskräften unterworfen, die sich in den Lagern durch einen drehmomentübertragenden Kontakt zwischen den Zahnrädern ergeben. Der Profilkörper ist im Wesentlichen ein prismatischer Körper, durch den in unterschiedliche Raumrichtungen eine Gehäusewandung zumindest teilweise bereitgestellt wird. Die Seitenwandungen sind im Wesentlichen flächige Komponenten, die beispielsweise aus einem Plattenmaterial hergestellt werden können. Die Nabenleiste ist einstückig ausgebildet, so dass die einzelnen Lagerbohrungen durch Demontage nicht teilbar sind. Erfindungsgemäß ist das Getriebegehäuse trennfugenfrei ausgebildet. Unter einer Trennfuge ist dabei eine Trennebene zu verstehen, durch die Getriebegehäuse gemäß dem Stand der Technik im Wesentlichen entlang der Lagerbohrungen für Wellenlager bei einer Demontage zerstörungsfrei teilbar sind. Das erfindungsgemäße Getriebegehäuse umfasst mit dem Profilkörper, den Seitenwandungen und der Nabenleiste somit separate Komponenten, die unabhängig voneinander herstellbar sind. Demzufolge sind die Nabenleiste, die Seitenwandungen und der Profilkörper jeweils belastungsgerecht auslegbar. Beispielsweise ist die Nabenleiste vorrangig im Hinblick auf eine thermische Belastung Ebenso ist für jede dieser Komponenten eine eigene separate Fertigungstechnik einsetzbar. Dementsprechend ist das erfindungsgemäße Getriebegehäuse schnell und kosteneffizient herstellbar. Konstruktionskompromisse, wie beispielsweise beim Gießen für Gehäusekomponenten mit Trennfuge, sind so vermeidbar. Ferner bietet das erfindungsgemäße Getriebegehäuse durch die separate Herstellbarkeit von Profilkörper, Nabenleiste und Seitenwandungen ein hohes Maß an Flexibilität. Der Profilkörper, die Seitenwandungen und die Nabenleiste sind jeweils separat an unterschiedliche Anforderungen an das zugehörige Getriebe anpassbar. Das Getriebe kann dabei als Stirnradgetriebe, Kegelradgetriebe, Kegelstirnradgetriebe, Schneckenradgetriebe oder Hypoidgetriebe ausgebildet sein.

In einer Ausführungsform des beanspruchten Getriebegehäuses ist der Profilkörper beidseitig von den Seitenwandungen zumindest teilweise verschlossen. Die Seitenwandungen sind dazu an offenen Seiten des Profilkörpers angeordnet, so dass das Getriebegehäuse fluiddicht ist, also geeignet ist, leckagefrei Schmierstoff, beispielsweise Öl, aufzunehmen. Durch die Seitenwandungen, die am Profilkörper befestigt sind, wird die Steifigkeit des Profilkörpers gesteigert. Dies erlaubt es, einen Profilkörper einzusetzen, der separat eine reduzierte Steifigkeit aufweist. Infolgedessen wird im beanspruchten Getriebegehäuse eine hinreichende Steifigkeit zum Aufnehmen von Reaktionskräften an der Nabenleiste anhand einfacher Komponenten bereitgestellt.

Des Weiteren kann zumindest eine der Seitenwandungen stoffschlüssig mit der Nabenleiste und/oder dem Profilkörper verbunden sein. Ebenso können auch zwei Seitenwandungen stoffschlüssig mit der Nabenleiste und/oder dem Profilkörper verbunden sein. Die stoffschlüssige Verbindung kann dabei als Schweißverbindung ausgebildet sein. Schweißverbindungen bieten ein hohes Maß an Belastbarkeit und eine dauerhaft zuverlässige Dichtwirkung. Die Schweißverbindungen können mittels Schutzgasschweißen, also MSG-Verfahren hergestellt werden, beispielsweise per MIG-Schweißen oder MAG-Schweißen. Ferner sind Schweißverbindungen automatisiert, beispielsweise mittels eines Roboters, herstellbar. Das beanspruchte Getriebegehäuse ermöglicht dadurch einen erhöhten Grad an Automatisierung bei der Herstellung und damit eine gesteigerte Kosteneffizienz. Alternativ oder ergänzend kann die stoffschlüssige Verbindung auch durch Löten oder Kleben hergestellt werden.

Darüber hinaus kann zumindest eine Schweißnaht, durch die eine stoffschlüssige Verbindung zwischen der Seitenwandung und der Nabenleiste oder dem Profilkörper hergestellt wird, an einer Außenfläche der Seitenwandung ausgebildet sein. Unter einer Außenseite ist die Seite der Seitenwandung zu verstehen, die im montierten Zustand des Getriebegehäuses zugänglich ist. Hierdurch besteht beim Herstellen des Getriebegehäuses Zugänglichkeit, was die Automatisierung der Herstellung weiter vereinfacht. Insbesondere wird ein Programmieren von Verfahrwegen für den Roboter vereinfacht. Ebenso ist die Verwendung kleiner Schweißköpfe entbehrlich. Ferner ist eine weitere Bearbeitung, wie beispielsweise ein Verputzen, der Schweißnaht entbehrlich. Die Schweißnaht wird im Betrieb des Getriebes nicht mit Schmierstoff benetzt, wodurch eine Kontamination des Schmierstoffs vermieden wird. Die Herstellung des beanspruchten Getriebegehäuses wird so weiter beschleunigt.

In einer weiteren Ausführungsform des beanspruchten Getriebegehäuses ist der Profilkörper einstückig ausgebildet. Der Profilkörper kann dazu aus einem flächigen Bandmaterial oder Blechmaterial hergestellt sein, das durch Abkanten umgeformt ist. Derartiges Bandmaterial bzw. Blechmaterial ist fluiddicht, insbesondere gegen Schmierstoff, ist einfach verarbeitbar und kosteneffizient. Gleichzeitig ist solches Material flexibel für unterschiedliche Formen des Profilkörpers einsetzbar, wodurch die Bauteilvielfalt für unterschiedliche Modelle des Getriebegehäuses verringert ist. Dementsprechend bietet das beanspruchte Getriebegehäuse ein erhöhtes Maß an Wirtschaftlichkeit. Alternativ kann der Profilkörper auch aus einem Gusswerkstoff hergestellt sein, beispielsweise per Sphäroguss.

Des Weiteren kann das beanspruchte Getriebegehäuse mit einem Schaulochrahmen versehen sein. Der Schaulochrahmen ist mit einem abnehmbaren Deckel versehebar und bietet optischen Zugang zu Getriebe im beanspruchten Getriebegehäuse. Der Schaulochrahmen kann dazu ausgebildet sein, Endkanten des Profilkörpers miteinander zu verbinden. Dementsprechend ist der Profilkörper, der im Wesentlichen C-förmig ausgebildet sein kann, zu einem geschlossenen Querschnitt ergänzbar. Dadurch wird die erzielbare Steifigkeit des Profilkörpers weiter gesteigert.

Ferner kann die Nabenleiste im beanspruchten Getriebegehäuse langlochförmig, oval, tropfenförmig, viereckig, oder polygonal ausgebildet sein. Die Form der Nabenleiste ist dadurch ohne Weiteres an die erforderlichen Durchmesser der Lagerbohrungen anpassbar. Ebenso ist die Nabenleiste an unterschiedlich Erfordernisse anpassbar. Eine viereckige Nabenleiste bietet beispielsweise ein erhöhtes Maß an Steifigkeit, eine ovale Nabenleiste ein günstiges Schwingungsverhalten, eine polygonale Nabenleiste einen gesteigerten Wärmeabtransport. Die Form der Nabenleiste ist unabhängig von den Seitenwänden und dem Profilkörper auswählbar. Des Weiteren ist eine Wandstärke, also eine Abmessung eines umlaufenden Randes um die Lagerbohrungen, somit an die in der Nabenleiste vorliegenden Reaktionskräfte anpassbar. Dies ermöglicht eine belastungsgerechte Dimensionierung der Nabenleiste und den effizienten Einsatz von leistungsfähigen Werkstoffen beim Herstellen der Nabenleiste. Durch den Verzicht auf die Trennfuge ist die Nabenleiste einstückig ausbildbar, was wiederum ein erhöhtes Maß an Festigkeit bietet. Damit sind ohne Weiteres Festigkeitsreserven erreichbar, durch die eine Demontage des Getriebegehäuses während der technisch sinnvoll nutzbaren Lebensdauer des Getriebes entbehrlich ist. Der vermeintliche Nachteil, der sich aus dem Verzicht auf die Trennfuge ergibt, wird dadurch zumindest teilweise ausgeglichen.

Des Weiteren können im beanspruchten Getriebegehäuse die Seitenwandungen und/oder die zwei Nabenleisten zueinander spiegelbildlich ausgebildet sein. Ergänzend können die Seitenwandungen und/oder die zwei Nabenleisten auch zueinander baugleich, also gegeneinander austauschbar, ausgebildet sein. Spiegelbildliche Formen von Nabenleisten bzw. Seitenwandungen sind in einfacher Weise herstellbar, wodurch ein hohes Maß an Wirtschaftlichkeit erzielbar ist. Die Verwendung von baugleichen Nabenleisten bzw. Seitenwandungen am beanspruchten Getriebegehäuse verwirklicht das Prinzip der Gleichteileverwendung, was die Herstellung des beanspruchten Getriebegehäuses weiter vereinfacht.

Ferner kann am beanspruchten Getriebegehäuse zumindest eine Rippe angeordnet sein, durch die eine Steifigkeit des Getriebegehäuses, beispielsweise eine Verwindungssteifigkeit, gesteigert wird. Für die zumindest eine Rippe ist eine Position an der Außenfläche einer Seitenwandung wählbar. Das beanspruchte Getriebegehäuse bietet soweit konstruktive Freiheit, dass die Position, der zumindest einen Rippe, im Wesentlichen frei wählbar ist. Dementsprechend kann mit einem Minimum an Rippen, die in zusätzlichen Bearbeitungsschritten mit dem Getriebegehäuse zu verbinden sind, eine erhöhte Steigerung der Steifigkeit des Getriebegehäuses erzielt werden. Folglich ist das beanspruchte Getriebegehäuse auch an Anwendungen mit erhöhten mechanischen Anforderungen schnell und einfach anpassbar.

Die zugrunde liegende Aufgabenstellung wird auch durch eine erfindungsgemäße Gehäusebaureihe für Getriebe gelöst. Die Gehäusebaureihe umfasst eine Mehrzahl an Getriebegehäusen, die jeweils einen Profilkörper aufweisen, der von zwei Seitenwandungen verschlossen ist. In zumindest einer der Seitenwandungen ist eine Nabenleiste angeordnet, die dazu ausgebildet ist, Lager für eine Welle des jeweiligen Getriebes aufzunehmen. Erfindungsgemäß sind die Getriebegehäuse, die zur Gehäusebaureihe gehören, trennfugenfrei ausgebildet. Unter einer Trennfuge ist dabei eine Trennebene zu verstehen, durch die Getriebegehäuse gemäß dem Stand der Technik im Wesentlichen entlang der Lagerbohrungen für Wellenlager bei einer Demontage zerstörungsfrei teilbar sind. Die erfindungsgemäße Gehäusebaureihe basiert unter anderem auf der Erkenntnis, dass ein Verzicht auf eine Trennfuge eine modulare Herstellung von separaten Komponenten wie dem Profilkörper, der Seitenwandungen und von Nabenleisten erlaubt, durch die die Herstellung der Gehäusebaureihe vereinfacht wird. Die Einfachheit der jeweiligen Komponenten, also des Profilkörpers, der Seitenwandungen und der Nabenleiste erlaubt ohne Weiteres eine Anpassung der Getriebegehäuse an unterschiedliche Einsatzzwecke. Infolge der so erzielten Skalierbarkeit der Getriebegehäuse in der erfindungsgemäßen Gehäusebaureihe bietet diese bei einem Minimum an vorzuhaltenden Rohlingen und Halbzeugen gleichzeitig eine erhöhte erreichbare Modellvielfalt.

In einer Ausführungsform der beanspruchten Getriebebaureihe weist diese zwei Getriebegehäuse, also zwei Modelle, auf, deren Seitenwandungen baugleich sind. Unter baugleich ist zu verstehen, dass die Seitenwandungen der zwei Getriebegehäuse bei einer Montage der Getriebegehäuse gegeneinander austauschbar sind. Die zwei Getriebegehäuse weisen Profilkörper auf, die jeweils eine unterschiedliche Profiltiefe aufweisen. Die Profiltiefe stellt hierbei die Dimension des Profilkörpers dar, die durch die gegenüberliegend angeordneten Seitenwandungen begrenzt ist und entlang der der Profilkörper im Wesentlichen prismatisch ausgebildet ist. Die zwei Getriebegehäuse weisen somit entlang einer Richtung unterschiedliche Abmessungen auf, wodurch diese dazu geeignet sind, unter Vermeidung von Leerraum im jeweiligen Getriebegehäuse unterschiedliche breite Zahnräder anzuordnen. Infolgedessen ist die beanspruchte Gehäusebaureihe an ein breites Leistungsspektrum anpassbar bei gleichzeitig effizienter Ausnutzung von Bauraum. Darüber hinaus kann zumindest ein Getriebegehäuse der Gehäusebaureihe einen hydraulischen Gehäusefüllgrad von 50% bis 80%, vorzugsweise von 60% bis 70% aufweisen. Der hydraulische Gehäusefüllgrad stellt hierbei das Verhältnis aus dem mit Getriebekomponenten und Betriebsstoffen, wie beispielsweise Zahnräder, Wellen, Lager und Schmierstoff eingenommenen Raum innerhalb des Getriebegehäuses und dem vom Getriebegehäuse umbauten lichten Raum dar. Beim Betriebsstoff ist auf eine bestimmungsgemäße Befüllung bezogen. Alternativ oder ergänzend kann zumindest ein Gehäuse der beanspruchten Getriebebaureihe einen mechanischen Gehäusefüllgrad von 20% bis 50%, vorzugsweise von 25% bis 40% aufweisen. Der mechanische Gehäusefüllgrad stellt hierbei das Verhältnis aus dem mit Getriebekomponenten eingenommenen Raum innerhalb des Getriebegehäuses und dem vom Getriebegehäuse umbauten lichten Raum dar. Betriebsstoffe wie Schmierstoff wird nicht berücksichtigt. Je höher der hydraulische bzw. mechanische Gehäusefüllgrad ist, umso baulich effizienter ist das entsprechende Getriebegehäuse. Zumindest eines der Getriebegehäuse in der beanspruchten Gehäusebaureihe kann ferner gemäß einer der oben dargestellten Ausführungsformen ausgebildet sein.

Des Weiteren kann die beanspruchte Getriebebaureihe zwei Getriebegehäuse umfassen, deren Seitenwandungen baugleich ausgebildet sind. Bei diesen weisen die jeweiligen Nabenleisten eine unterschiedliche Anzahl an Lagerbohrungen und/oder unterschiedliche Anordnungen von Lagerbohrungen auf. Eine Nabenleiste mit unterschiedlicher Anzahl an Lagerbohrungen erlaubt es, die entsprechenden unterschiedlichen Nabenleisten aus baugleichen Rohlingen oder Halbzeugen herzustellen. Die Ausnehmungen in den zugehörigen Seitenwandungen sind dadurch baugleich ausbildbar, so dass eine gesteigerte Kommunalität zwischen Komponenten unterschiedlicher Getriebegehäuse in der beanspruchten Gehäusebaureihe erzielt wird. Unter unterschiedlichen Anordnungen von Lagerbohrungen ist, in der entsprechenden Seitenansicht auf die Seitenwandungen betrachtet, die Lage der Mittelpunkte der jeweiligen Lagerbohrungen zu verstehen. Diese können linienförmig oder entlang eines Polygonzugs angeordnet sein. Zur Anordnung der Lagerbohrungen gehören auch die Durchmesser der jeweiligen Lagerbohrungen. Auch hierdurch wird die Herstellung einer breiten Spanne an Getriebegehäusen aus einer reduzierten Anzahl an Rohlingen und Halbzeugen vereinfacht. Alternativ oder ergänzend ist auch eine Achshöhe für die jeweiligen Lagerbohrungen einstellbar.

Darüber hinaus kann in zumindest einem der Getriebegehäuse in der beanspruchten Gehäusebaureihe zumindest eine der Seitenwandungen mit der Nabenleiste und/oder dem Profilkörper stoffschlüssig verbunden sein. Die stoffschlüssige Verbindung kann beispielsweise als Schweißverbindung ausgebildet sein, die in einfacher Weise automatisiert, beispielsweise mit einem Roboter, hergestellt sein kann. Schweißverbindungen bieten ein hohes Maß an Festigkeit und Dichtwirkung gegen Betriebsstoffe von Getrieben, beispielsweise Schmierstoffe. Infolgedessen wird für die beanspruchte Gehäusebaureihe ein erhöhtes Maß an Wirtschaftlichkeit erzielt. Ferner kann bei der Herstellung des entsprechenden Gehäuses zuerst die Nabenleiste mit der zugehörigen Seitenwandung stoffschlüssig zu einer Baugruppe verbunden werden. Die Baugruppe wiederum ist danach mit dem Profilkörper verbindbar. Hierdurch werden die Handhabungen schwerer und sperriger Komponenten reduziert. Alternativ kann die stoffschlüssige Verbindung auch durch Löten oder Kleben hergestellt sein.

In einer weiteren Ausführungsform der beanspruchten Gehäusebaureihe ist eine Schweißnaht zu einem Verbinden der Seitenwandung mit der Nabenleiste oder dem Profilkörper an einer Außenfläche der Seitenwandung ausgebildet. Die Schweißnaht kann unverarbeitet ausgebildet sein, also nicht verputzt, nicht glattgeschliffen, etc. sein. Durch das Ausbilden der Schweißnaht an der Außenfläche der Seitenwandung wird eine Kontamination von Schmierstoff durch Kontakt mit der Schweißnaht vermieden, so dass eine weitere Verarbeitung wie beispielsweise Verputzen entbehrlich ist. Hierdurch wird die Herstellung der beanspruchten Gehäusebaureihe weiter vereinfacht.

Die eingangs dargestellte Aufgabenstellung wird auch durch ein erfindungsgemäßes Getriebe gelöst. Das Getriebe umfasst eine Mehrzahl an Wellen und Zahnrädern, die drehmomentübertragend in einem Getriebegehäuse angeordnet sind. Das Getriebe kann beispielsweise als Stirnradgetriebe, Kegelradgetriebe, Kegelstirnradgetriebe, Schneckengetriebe oder Hypoidgetriebe ausgebildet sein. Erfindungsgemäß ist das Getriebegehäuse des Getriebes gemäß einer der oben skizzierten Ausführungsformen ausgebildet und/oder aus einer Gehäusebaureihe nach einer der dargestellten Ausführungsformen ausgewählt.

Ebenso wird die beschriebene Aufgabe durch eine erfindungsgemäße Industrie-Applikation gelöst. Die Industrie-Applikation umfasst eine Antriebseinheit, durch die eine Antriebsleistung für einen Betrieb einer Abtriebseinheit zur Verfügung gestellt wird. Die Antriebseinheit ist zum Übertragen der Antriebsleistung an die Abtriebseinheit mit einem Getriebe drehmomentübertragend verbunden. Die Antriebseinheit kann hierzu als Elektromotor, Verbrennungsmotor, Hydraulikmotor, Schwungrad, oder Turbinenrad ausgebildet sein. Die Abtriebseinheit kann eine mechanische Anwendung sein, durch die die Funktion der Industrie-Applikation bestimmt ist. Die Industrie-Applikation kann insgesamt als Mühle, Wälzmühle, Zementmühle, Zuckermühle, Extruder, Förderanlage, Bandantrieb, Becherwerk, Gesteinsbrecher, Walzenbrecher, Rührwerk, Drehrohrofen, Walzenpresse, Rollpresse, Pumpe, Ventilator, Schrottpresse, Müllpresse, Schiffsantrieb, oder Hebevorrichtung ausgebildet sein. Die Antriebseinheit ist dazu mit einem Getriebe verbunden, über das die Antriebsleistung an die Abtriebseinheit übertragen wird. Erfindungsgemäß ist das Getriebe nach einer der oben skizzierten Ausführungsformen ausgebildet.

Die skizzierte Aufgabenstellung wird gleichermaßen durch ein erfindungsgemäßes Computerprogrammprodukt gelöst, das dazu ausgebildet ist, ein Betriebsverhalten eines Getriebes zu simulieren. Das Getriebe umfasst ein Getriebegehäuse, in dem Wellen, Lager und Zahnräder als Getriebekomponenten und ein Betriebsstoff aufgenommen sind. Zum Betriebsverhalten kann eine Kinematik von Getriebekomponenten gehören, ein Verformungsverhalten des Getriebegehäuses, ein Fließverhalten oder thermisches Verhalten des Betriebsstoffs, ein thermisches Verhalten des Getriebegehäuses, oder eine Kombination einer Auswahl hieraus. Das Computerprogrammprodukt kann eine Datenschnittstelle aufweisen, die dazu ausgebildet ist, vorliegende Betriebszustände des Getriebes als Eingabeparameter an das Computerprogrammprodukt zu übergeben. Derartige Betriebszustände können eine Drehzahl, ein Drehmoment, eine drehzahl- oder drehmomentbezogene Anfahrrampe, eine Umgebungstemperatur, eine Ausgangstemperatur für den Betriebsstoff, eine vorhandene Menge an Betriebsstoff und/oder einen Pegel des Betriebsstoffs umfassen. Des Weiteren kann das Computerprogrammprodukt eine Datenschnittstelle zum Ausgeben von Simulationsergebnissen an weitere simulationsgerichtete Computerprogrammprodukte aufweisen. Das beanspruchte Computerprogrammprodukt kann beispielsweise als Digitaler Zwilling, auch Digital Twin genannt, ausgebildet sein. Derartige Digitale Zwillinge sind unter anderem in der Offenlegungsschrift US 2017/286572 A1 näher skizziert. Der Offenbarungsgehalt von US 2017/286572 A1 wird durch Verweisung in die vorliegende Anmeldung mit einbezogen. Erfindungsgemäß ist das Getriebegehäuse des zu simulierenden Getriebes nach einer der oben skizzierten Ausführungsformen ausgebildet. Alternativ oder ergänzend ist das Getriebegehäuse des zu simulierenden Getriebes aus einer Getriebebaureihe nach einer der oben dargestellten Ausführungsformen ausgewählt. Das erfindungsgemäße Computerprogrammprodukt erlaubt es in einfacher Weise, die zugrundeliegenden Getriebegehäuse an die Randbedingungen einer Anwendung anzupassen und so die technischen Vorzüge der Getriebegehäuse in erhöhtem Umfang zu verwirklichen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Schrägansicht einer ersten Ausführungsform des beanspruchten Getriebegehäuses;
- FIG 2: schematisch eine Schrägansicht einer zweiten Ausführungsform des beanspruchten Getriebegehäuses;
- FIG 3: schematisch einen Aufbau einer Ausführungsform der beanspruchten Industrie-Applikation.

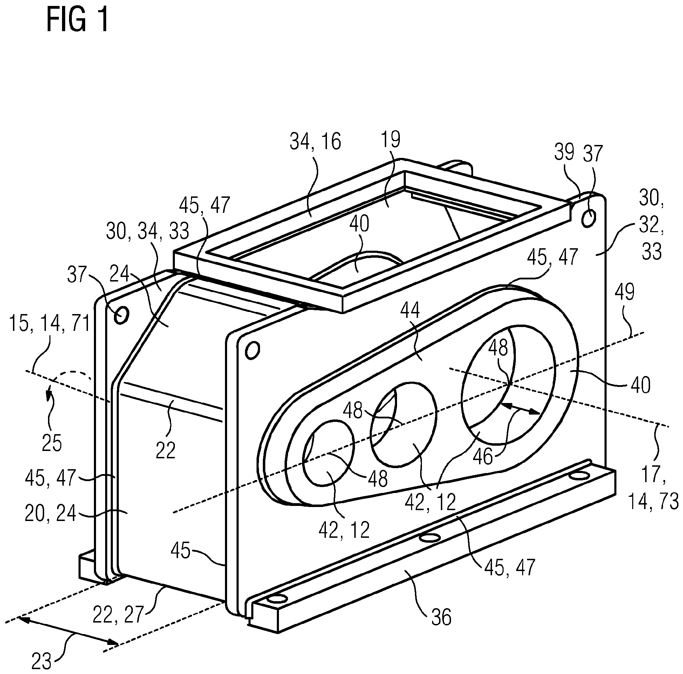

In FIG 1 ist schematisch eine Schrägansicht einer ersten Ausführungsform des beanspruchten Getriebegehäuses 10 dargestellt, das für ein beanspruchtes Getriebe 50 verwendbar ist. Das Getriebegehäuse 10 gehört dabei zu einer Gehäusebaureihe 60, die eine Mehrzahl an derartigen Getriebegehäusen 10 umfasst. Das Getriebegehäuse 10 umfasst einen Profilkörper 20, der einstückig ausgebildet ist. Der Profilkörper 20 ist aus einem Bandmaterial hergestellt, das durch Abkantungen 22 umgeformt ist. Zwischen den Abkantungen 22 liegen flächige Abschnitte 24 des Profilkörpers 20, durch die ein lichter Innenraum 19 des Getriebegehäuses 10 teilweise umschlossen wird. Der Profilkörper 20 weist eine Profiltiefe 23 auf, die in einfacher Weise anpassbar ist. Dadurch kann das Getriebegehäuse 10 in im Wesentlichen jeglicher Profiltiefe 23, und damit Breite, hergestellt werden. Das Getriebegehäuse 10 umfasst auch zwei Seitenwandungen 30, nämlich eine erste und eine zweite Seitenwandung 32, 34, die gegenüberliegend angeordnet sind. Die Seitenwandungen 32, 34 sind über stoffschlüssige Verbindungen 45 jeweils mit einer Fußleiste 36 verbunden. Das Getriebegehäuse 10 ist für ein Stirnradgetriebe geeignet, bei dem über eine Getriebeeingangswelle 71 Antriebsleistung 25 entlang einer Drehachse 15 zugeführt wird. Die Antriebsleistung 25 wird, unter Berücksichtigung von mechanischen Verlusten, über eine Getriebeausgangswelle 73 entlang einer parallel angeordneten Drehachse 17 aus dem Getriebegehäuse 10 geleitet. Die erste und zweite Seitenwandung 32, 34 sind dementsprechend entlang der Drehachsen 13, 17 der Getriebeeingangswelle 71 und der Getriebeausgangswelle 73 gegenüberliegend angeordnet. Ferner sich die Seitenwandungen 30, 32, 34 zueinander spiegelbildlich ausgebildet. In den Seitenwandungen 30 ist jeweils eine Nabenleiste 40 aufgenommen, die eine Mehrzahl an Lagerbohrungen 42 aufweist. Die Lagerbohrungen 42 sind dazu ausgebildet, in einem montierten Zustand des Getriebes 50 Lager 12 für Wellen 14 aufzunehmen, die unter anderem als Getriebeeingangswelle 71 bzw. Getriebeausgangswelle 73 dienen. Die Nabenleisten 40 an der ersten und zweiten Seitenwandung 32, 34 sind korrespondierend zu den Seitenwandungen 30 zueinander spiegelbildlich ausgebildet. Die Nabenleisten 40 weisen im Wesentlichen eine zulaufende Langlochform auf, die auch als oval-förmig bezeichnet wird.

Die Seitenwandungen 30 sind jeweils über mindestens eine stoffschlüssige Verbindung 45, die als Schweißnaht 47 ausgebildet ist, mit dem Profilkörper 20 unlösbar, also im Wesentlichen nicht zerstörungsfrei lösbar, verbunden. Die stoffschlüssige Verbindung 45 zwischen der jeweiligen Seitenwandung 30, 32, 34 und dem Profilkörper 20 ist an einer Außenfläche 33 der Seitenwandung 30, 32, 34 ausgebildet. Dadurch ist die stoffschlüssige Verbindung 45 bei einer Montage des Getriebegehäuses 10 in einfacher Weise zugänglich, so dass die stoffschlüssige Verbindung beispielsweise durch einen nicht näher dargestellten Roboter herstellbar ist. Die stoffschlüssige Verbindung 45 wird im Betrieb des Getriebes 50 nicht durch einen Schmierstoff 27 benetzt, der im lichten Innenraum 19 des Getriebegehäuses 10 aufgenommen ist. Dementsprechend ist eine Gefahr einer Kontamination des Schmierstoffs 27 durch die stoffschlüssige Verbindung 45, also die Schweißnaht 47, unterbunden. Eine weitere Bearbeitung der Schweißnaht 47, beispielsweise durch Verputzen, ist entbehrlich. Ferner weisen die Seitenwandungen 30, 32, 34 Hebeösen 37 auf, durch die das Getriebegehäuse 10 mittels eines Krans anhebbar ist.

Die Nabenleisten 40 weisen eine geradlinige Anordnung 49 von Lagerbohrungen 42 auf, also eine geradlinige Positionierung von Nabenmittelpunkten 48. Die Lagerbohrungen 42 sind durch einen umlaufenden Rand 44 eingefasst, durch den die Lagerbohrungen 42 gestützt werden. Die Nabenleisten 40 sind als separate Komponenten ausgebildet, die jeweils mittels einer stoffschlüssigen Verbindung 45, die als Schweißnaht 47 ausgebildet ist, mit der jeweiligen Seitenwandung 30, 32, 34 verbunden ist. Die stoffschlüssige Verbindung 45 ist einer Außenfläche 33 der Seitenwandung 30, 32, 34 angeordnet und dadurch auch im montierten Zustand des Getriebegehäuses 10 einfach zugänglich. Die Nabenleiste 40 weist eine Nabenbreite 46 auf, durch die eine maximale Lagerbreite für ein Lager 12 vorgegeben ist, das in der jeweiligen Nabe 42 aufnehmbar ist. Die Nabenbreite 46 ist höher als eine Wandstärke 39 der Seitenwandung 30, 32. Dementsprechend ist die Nabenleiste 40 im Wesentlichen unabhängig von den Seitenwandungen 30, 32, 34 auslegbar. Dies erlaubt einen effizienten und gewichtssparenden Einsatz von Werkstoffen. Die Nabenleiste 40 ist aus einem höher beanspruchbaren Werkstoff herstellbar als die Seitenwandungen 30, 32, 34. Auch bei einer relativ geringen Wandstärke 39 der Seitenwandungen 30, 32, 34 sind diese dazu geeignet, Querkräfte auf Wellen 14, die im Getriebegehäuse 10 anzuordnen sind, aufzunehmen. Ferner ist der Profilkörper 20 mit einem Schaulochrahmen 35 verbunden, durch den im montierten Zustand des Getriebes 50 dessen Zahnräder 16 zugänglich sind. Der Schaulochrahmen 35 ist umlaufend ausgebildet und verbindet offene Enden des Profilkörpers 20 miteinander. Die Kombination aus Schaulochrahmen 35 und Profilkörper 20 bildet so einen geschlossenen Querschnitt, der gegenüber Schubbeanspruchungen und Torsionsbeanspruchungen eine erhöhte Steifigkeit aufweist. Der Schaulochrahmen 35 ist, wie die Nabenleiste 40, die Seitenwandungen 30, 32, 34 und der Profilkörper 20 separat herstellbar und durch eine stoffschlüssige Verbindung 45, wie beispielsweise eine Schweißnaht 47, am Getriebegehäuse 10 befestigbar. Das Getriebegehäuse 10 ist in einem nicht näher dargestellten Computerprogrammprodukt 80 derart abgebildet, dass ein Betriebsverhalten eines Getriebes 50 simulierbar ist, bei dem das Getriebegehäuse 10 eingesetzt wird.

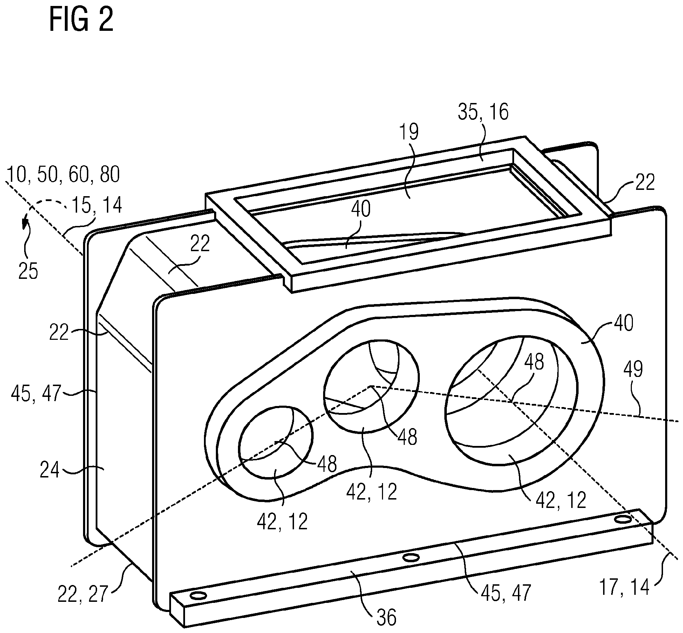

FIG 2 zeigt schematisch eine Schrägansicht einer ersten Ausführungsform des beanspruchten Getriebegehäuses 10, das für ein beanspruchtes Getriebe 50 verwendbar ist. Das Getriebegehäuse 10 gehört dabei zu einer Gehäusebaureihe 60, die eine Mehrzahl an derartigen Getriebegehäusen 10 umfasst. Das Getriebegehäuse 10 umfasst einen Profilkörper 20, der einstückig ausgebildet ist. Der Profilkörper 20 ist aus einem Bandmaterial hergestellt, das durch Abkantungen 22 umgeformt ist. Zwischen den Abkantungen 22 liegen flächige Abschnitte 24 des Profilkörpers 20, durch die ein lichter Innenraum 19 des Getriebegehäuses 10 teilweise umschlossen wird. Der Profilkörper 20 weist eine Profiltiefe 23 auf, die in einfacher Weise anpassbar ist. Dadurch kann das Getriebegehäuse 10 in im Wesentlichen jeglicher Profiltiefe 23, und damit Breite, hergestellt werden. Das Getriebegehäuse 10 umfasst auch zwei Seitenwandungen 30, nämlich eine erste und eine zweite Seitenwandung 32, 34, die gegenüberliegend angeordnet sind. Das Getriebegehäuse 10 ist für ein Stirnradgetriebe geeignet, bei dem über eine Getriebeeingangswelle 71 Antriebsleistung 25 entlang einer Drehachse 15 zugeführt wird. Die Antriebsleistung 25 wird, unter Berücksichtigung von mechanischen Verlusten, über eine Getriebeausgangswelle 73 entlang einer parallel angeordneten Drehachse 17 aus dem Getriebegehäuse 10 geleitet. Die erste und zweite Seitenwandung 32, 34 sind dementsprechend entlang der Drehachsen 13, 17 der Getriebeeingangswelle 71 und der Getriebeausgangswelle 73 gegenüberliegend angeordnet. Die Seitenwandungen 32, 34 sind über stoffschlüssige Verbindungen 45 jeweils mit einer Fußleiste 36 verbunden. Ferner sich die Seitenwandungen 30, 32, 34 zueinander spiegelbildlich ausgebildet. In den Seitenwandungen 30 ist jeweils eine Nabenleiste 40 aufgenommen, die eine Mehrzahl an Lagerbohrungen 42 aufweist. Die Lagerbohrungen 42 sind dazu ausgebildet, in einem montierten Zustand des Getriebes 50 Lager 12 für Wellen 14 aufzunehmen, die unter anderem als Getriebeeingangswelle 71 bzw. Getriebeausgangswelle 73 dienen. Die Nabenleisten 40 an der ersten und zweiten Seitenwandung 32, 34 sind korrespondierend zu den Seitenwandungen 30 zueinander spiegelbildlich ausgebildet. Die Nabenleisten 40 weisen im Wesentlichen eine zulaufende Langlochform auf, die auch als oval-förmig bezeichnet wird.

Die Seitenwandungen 30 sind jeweils über mindestens eine stoffschlüssige Verbindung 45, die als Schweißnaht 47 ausgebildet ist, mit dem Profilkörper 20 unlösbar, also im Wesentlichen nicht zerstörungsfrei lösbar, verbunden. Die stoffschlüssige Verbindung 45 zwischen der jeweiligen Seitenwandung 30, 32, 34 und dem Profilkörper 20 ist an einer Außenfläche 33 der Seitenwandung 30, 32, 34 ausgebildet. Dadurch ist die stoffschlüssige Verbindung 45 bei einer Montage des Getriebegehäuses 10 in einfacher Weise zugänglich, so dass die stoffschlüssige Verbindung beispielsweise durch einen nicht näher dargestellten Roboter herstellbar ist. Die stoffschlüssige Verbindung 45 wird im Betrieb des Getriebes 50 nicht durch einen Schmierstoff 27 benetzt, der im lichten Innenraum 19 des Getriebegehäuses 10 aufgenommen ist. Dementsprechend ist eine Gefahr einer Kontamination des Schmierstoffs 27 durch die stoffschlüssige Verbindung 45, also die Schweißnaht 47, unterbunden. Eine weitere Bearbeitung der Schweißnaht 47, beispielsweise durch Verputzen, ist entbehrlich. Ferner weisen die Seitenwandungen 30, 32, 34 Hebeösen 37 auf, durch die das Getriebegehäuse 10 mittels eines Krans anhebbar ist.

Die Nabenleisten 40 weisen eine polygonzugartige Anordnung 49 von Lagerbohrungen 42 auf, also eine winkelig versetzte Positionierung von Nabenmittelpunkten 48. Die Nabenleiste 40 ist in ihrer Anordnung 49 der Lagerbohrungen 42 anpassbar ohne dass eine weitgehende Umkonstruktion der Seitenwandungen 30, 32, 34 und/oder des Profilkörpers 20 erforderlich ist. Hierdurch ist das Getriebegehäuse 10 in einfacher Weise an unterschiedliche Einsatzzwecke anpassbar. Die Lagerbohrungen 42 sind durch einen umlaufenden Rand 44 eingefasst, durch den die Lagerbohrungen 42 gestützt werden. Die Nabenleisten 40 sind als separate Komponenten ausgebildet, die jeweils mittels einer stoffschlüssigen Verbindung 45, die als Schweißnaht 47 ausgebildet ist, mit der jeweiligen Seitenwandung 30, 32, 34 verbunden ist. Die stoffschlüssige Verbindung 45 ist einer Außenfläche 33 der Seitenwandung 30, 32, 34 angeordnet und dadurch auch im montierten Zustand des Getriebegehäuses 10 einfach zugänglich. Die Nabenleiste 40 weist eine Nabenbreite 46 auf, durch die eine maximale Lagerbreite für ein Lager 12 vorgegeben ist, das in der jeweiligen Nabe 42 aufnehmbar ist. Die Nabenbreite 46 ist höher als eine Wandstärke 39 der Seitenwandung 30, 32. Dementsprechend ist die Nabenleiste 40 im Wesentlichen unabhängig von den Seitenwandungen 30, 32, 34 auslegbar. Dies erlaubt einen effizienten und gewichtssparenden Einsatz von Werkstoffen. Die Nabenleiste 40 ist aus einem höher beanspruchbaren Werkstoff herstellbar als die Seitenwandungen 30, 32, 34. Auch bei einer relativ geringen Wandstärke 39 der Seitenwandungen 30, 32, 34 sind diese dazu geeignet, Querkräfte auf Wellen 14, die im Getriebegehäuse 10 anzuordnen sind, aufzunehmen. Ferner ist der Profilkörper 20 mit einem Schaulochrahmen 35 verbunden, durch den im montierten Zustand des Getriebes 50 dessen Zahnräder 16 zugänglich sind. Der Schaulochrahmen 35 ist umlaufend ausgebildet und verbindet offene Enden des Profilkörpers 20 miteinander. Die Kombination aus Schaulochrahmen 35 und Profilkörper 20 bildet so einen geschlossenen Querschnitt, der gegenüber Schubbeanspruchungen und Torsionsbeanspruchungen eine erhöhte Steifigkeit aufweist. Der Schaulochrahmen 35 ist, wie die Nabenleiste 40, die Seitenwandungen 30, 32, 34 und der Profilkörper 20 separat herstellbar und durch eine stoffschlüssige Verbindung 45, wie beispielsweise eine Schweißnaht 47, am Getriebegehäuse 10 befestigbar. Das Getriebegehäuse 10 ist in einem nicht näher dargestellten Computerprogrammprodukt 80 derart abgebildet, dass ein Betriebsverhalten eines Getriebes 50 simulierbar ist, bei dem das Getriebegehäuse 10 eingesetzt wird.

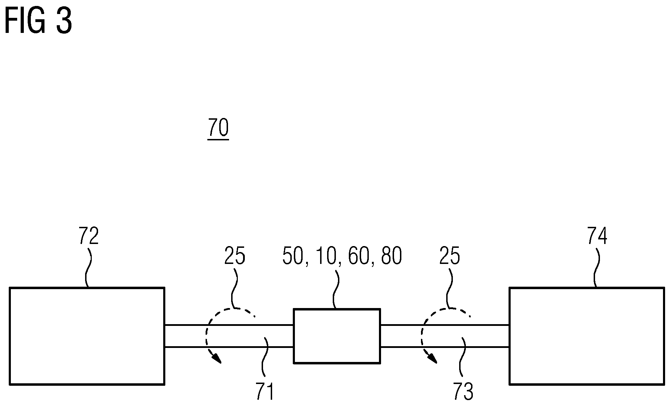

In FIG 3 ist schematisch der Aufbau einer Ausführungsform einer beanspruchten Industrie-Applikation 70 dargestellt, die über eine Antriebseinheit 72 und eine Abtriebseinheit 74 verfügt. Die Antriebseinheit kann beispielsweise als Elektromotor, Verbrennungsmotor oder Hydraulikmotor ausgebildet sein kann. Durch die Antriebseinheit wird über eine Ausgangswelle, die als Getriebeeingangswelle 71 dient, eine Antriebsleistung 25 bereitgestellt, die zur Abtriebseinheit 74 zu übertragen ist. Die Antriebseinheit 74 kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Becherwerk, Bandantrieb, Hubvorrichtung, Müllpresse oder Schrottpresse ausgebildet sein. Die Abtriebseinheit 74 weist hierzu eine Eingangswelle auf, die als Getriebeausgangswelle 73 ausgebildet ist. Die Antriebseinheit 72 und die Abtriebseinheit 74 sind über ein Getriebe 50 miteinander verbunden. Das Getriebe 50 weist ein Getriebegehäuse 10 auf, das nach einer der oben skizzierten Ausführungsformen ausgebildet ist und/oder aus einer Gehäusereihe 60 ausgewählt ist, das nach einer der beschriebenen Ausführungsformen ausgebildet ist.

## Patentansprüche

1. Getriebegehäuse (10), umfassend einen Profilkörper (20), zwei Seitenwandungen (30,32,34) und eine Nabenleiste (40), die an einer der Seitenwandungen (30,32,34) befestigt ist, **dadurch gekennzeichnet , dass** das Getriebegehäuse (10) trennfugenfrei ausgebildet ist.

2. Getriebegehäuse (10) nach Anspruch 1, **dadurch gekennzeichnet, dass** der Profilkörper (20) beidseitig von den Seitenwandungen (30,32,34) zumindest teilweise verschlossen ist.

3. Getriebegehäuse (10) nach Anspruch 1 oder 2, **dadurch gekennzeichnet, dass** zumindest eine der Seitenwandungen (30,32,34) stoffschlüssig mit der Nabenleiste (40) und/oder dem Profilkörper (20) verbunden ist.

4. Getriebegehäuse (10) nach Anspruch 3, **dadurch gekennzeichnet, dass** zumindest eine Schweißnaht (47) an der Seitenwandung (30,32,34) an deren Außenfläche (33) ausgebildet ist.

5. Getriebegehäuse (10) nach einem der Ansprüche 1 bis 4, **dadurch gekennzeichnet, dass** der Profilkörper (20) einstückig ausgebildet ist.

6. Getriebegehäuse (10) nach einem der Ansprüche 1 bis 5, **dadurch gekennzeichnet, dass** das Getriebegehäuse (10) einen Schaulochrahmen (35) umfasst, der zu einem Schließen eines offenen Querschnitts des Profilkörpers (20) angeordnet ist.

7. Getriebegehäuse (10) nach einem der Ansprüche 1 bis 6, **dadurch gekennzeichnet, dass** die Nabenleiste (40) langlochförmig, oval, tropfenförmig, viereckig oder polygonal ausgebildet ist.

8. Getriebegehäuse (10) nach einem der Ansprüche 1 bis 8, **dadurch gekennzeichnet, dass** die Seitenwandungen (30,32,34) und/oder die zwei Nabenleisten (40) zueinander spiegelbildlich ausgebildet sind.

9. Gehäusebaureihe (60) für Getriebe (50), umfassend eine Mehrzahl an Getriebegehäusen (10), die einen Profilkörper (20) aufweisen, der von zwei Seitenwandungen (30,32,34) verschlossen ist, und in zumindest einer der Seitenwandungen (30,32,34) eine Nabenleiste (40) angeordnet ist, **dadurch gekennzeichnet, dass** die Getriebegehäuse (10) trennfugenfrei ausgebildet sind.

10. Gehäusebaureihe (60) nach Anspruch 9, **dadurch gekennzeichnet, dass** die Getriebebaureihe (60) zwei Getriebegehäuse (10) aufweist, deren Seitenwandungen (30,32,34) baugleich sind und deren Profilkörper (20) eine unterschiedliche Profiltiefe (23) aufweisen.

11. Gehäusebaureihe (60) nach einem der Ansprüche 1 bis 10, **dadurch gekennzeichnet, dass** zumindest eines der Getriebegehäuse (10) einen hydraulischen Gehäusefüllgrad von 50% bis 80% und/oder einen mechanischen Gehäusefüllgrad von 20% bis 50% aufweist.

12. Gehäusebaureihe (60) nach Anspruch 9 bis 11, **dadurch gekennzeichnet, dass** die Getriebebaureihe (60) zwei Getriebegehäuse (10) aufweist, deren Seitenwandungen (30,32,34) baugleich sind und deren Nabenleisten (40) eine unterschiedliche Anzahl an Lagerbohrungen(42) und/oder unterschiedliche Anordnungen (49) an Lagerbohrungen (42) aufweisen.

13. Gehäusebaureihe (60) nach einem der Ansprüche 9 bis 12, **dadurch gekennzeichnet, dass** zumindest eine der Seitenwandungen (30,32,34) mit der Nabenleiste (40) und/oder dem Profilkörper (20) stoffschlüssig verbunden ist.

14. Gehäusebaureihe (60) nach einem der Ansprüche 9 bis 13, **dadurch gekennzeichnet, dass** zumindest eine Schweißnaht (47) zu Verbinden der Seitenwandung (30,32,34) mit der Nabenleiste (40) oder dem Profilkörper (20) an einer Außenfläche (33) der Seitenwandung (30,32,34) ausgebildet ist.

15. Getriebe (50), umfassend eine Mehrzahl an Wellen (14,71, 73) und Zahnrädern (16), die drehmomentübertragend in einem Getriebegehäuse (10) angeordnet sind, **dadurch gekennzeichnet, dass** das Getriebegehäuse (10) nach einem der Ansprüche 1 bis 9 ausgebildet ist.

16. Industrie-Applikation (70), umfassend eine Antriebseinheit (72) und eine Abtriebseinheit (74), die über ein Getriebe (50) miteinander drehmomentübertragend verbunden sind, **dadurch gekennzeichnet, dass** das Getriebe (50) ein Getriebegehäuse (10) umfasst, das nach einem der Ansprüche 1 bis 9 ausgebildet ist und/oder aus einer Gehäusebaureihe (60) nach einem der Ansprüche 10 bis 14 ausgewählt ist.

17. Computerprogrammprodukt (80) zum Simulieren eines Betriebsverhaltens eines Getriebes (50), das ein Getriebegehäuse (10) umfasst, **dadurch gekennzeichnet, dass** das Getriebegehäuse (10) nach einem der Ansprüche 1 bis 9 ausgebildet ist und/oder aus einer Getriebegehäusereihe (60) nach einem der Ansprüche 10 bis 15 ausgewählt ist.
